# EUROPÄISCHE PATENTSCHRIFT

(11) **EP 4 389 294 B1**
(45) Veröffentlichungstag und Bekanntmachung des Hinweises auf die Patenterteilung: **01.07.2026**
(21) Anmeldenummer: 23213370.2
(22) Anmeldetag: 30.11.2023
(51) Int. Cl.: B05B 1/26, B23K 26/382

(54) **DOPPELSTRAHLDÜSENKÖRPER**
DOUBLE JET NOZZLE BODY
CORPS DE BUSE À DOUBLE JET

(30) Priorität: 23.12.2022 DE 102022134680
(43) Veröffentlichungstag der Anmeldung: 26.06.2024
(73) Patentinhaber: Aero Pump GmbH, 65239 Hochheim/Main (DE)
(72) Erfinder: Marszalek, Milena Angelika, 55139 Mainz (DE); Mersmann, Andreas, 65239 Hochheim/Main (DE); Rother, Sebastian, 55116 Mainz (DE)
(74) Vertreter: Keil & Schaafhausen Patentanwälte PartGmbB

(56) Entgegenhaltungen:
- EP-A1- 3 315 207
- EP-B1- 3 218 032
- CN-U- 202 180 013
- DE-U1- 202017 002 851
- FR-A1- 2 984 857

## Beschreibung

Die vorliegende Erfindung betrifft ein Verfahren zur Herstellung eines Doppelstrahldüsenkörpers aus einem Düsenkörperrohling, der mittels Spritzguss oder additiver Fertigung hergestellt wird, wobei der Doppelstrahldüsenkörper wenigstens zwei Düsengeometrien aufweist, wobei die wenigstens Düsengeometrien jeweils eine Achse aufweisen, wobei die wenigstens zwei Achsen sich in einer Austragsrichtung erstecken und außerhalb der Düsengeometrien an einem Schnittpunkt schneiden, wobei der Düsenkörperrohling anschließend durch Laserbearbeitung zum Doppelstrahldüsenkörper bearbeitet wird.

Ein Verfahren zur Herstellung eines Doppelstrahldüsenköpers geht beispielsweise aus EP 3 218 032 B1 hervor. Dabei umfasst der dort beschriebene Kunststoffdüsenkörper einen oder mehrere dünnwandige Abschnitte, wobei die dünnwandigen Abschnitte von einem oder mehreren dickwandigen Abschnitten getragen werden. Weiterhin weist die Kunststoffdüsenanordnung mindestens zwei gegenüberliegende Löcher mit Durchmessern von 5 µm bis 100 µm auf, wobei sich Achsen der Löcher in einem Winkel zwischen 55° und 125° zu einer Außenfläche des dünnwandigen Abschnittes treffen. Weiterhin werden die Löcher durch Laserbohren hergestellt.

Weitere Verfahren zur Herstellung eines Doppelstrahldüsenkörpers unter Einsatz von Laserbearbeitung sind aus DE 20 2017 002851 U1, EP 3 315 207 A1 oder FR 2 984 857 A1 bekannt.

Durch physikalische Grenzen des Kunststoffspritzgussverfahrens bzw. der additiven Fertigung sind dünnwandige Abschnitte des Doppelstrahldüsenkörpers nicht oder nur sehr schwer durch eine aufwändige Fertigung herzustellen. Folglich müssen entsprechend kleine Löcher durch ein nachgeordnetes Verfahren, dem Laserbohrverfahren gefertigt werden.

Da jedoch wenigstens zwei Düsenbohrungen erstellt werden müssen, deren Achsen sich außerhalb des Düsenkörpers treffen, muss das Laserbohrverfahren wenigstens zweimal angewendet werden. Dabei muss der Rohling jedes Mal so ausgerichtet werden, dass die wenigstens beiden Achsen der wenigstens zwei Düsenbohrungen exakt fluchten, so dass eine entsprechende Funktion der Düse gewährleistet werden kann. Da die Düsenbohrungen bereits im µm-Bereich dimensioniert sind, führt eine fehlerhafte Ausrichtung des Rohlings um wenige Tausendstel mm bzw. Bruchteilen davon zu einer Funktionseinschränkung. Entsprechend aufwändig gestaltet sich die Ausrichtung des Düsenkörperrohlings während der Bearbeitung durch das Laserbohrungsverfahren. Diese exakte Ausrichtung führt zu einer Limitation der Zykluszeiten und damit zu hohen Kosten.

Aufgabe der vorliegenden Erfindung ist es daher, ein Verfahren zur Herstellung eines Doppelstrahldüsenkörpers vorzuschlagen, das kostengünstig durchzuführen ist.

Diese Aufgabe wird durch die Merkmale des Anspruchs 1 gelöst. Vorteilhafte Ausgestaltungen ergeben sich aus den Unteransprüchen.

Dabei wird durch die Laserbearbeitung ein Zustrom hergestellt, der zwischen einer Düsengeometrie und einer Fluidkammer angeordnet ist, und/oder ein Trichter wird durch die Laserbearbeitung hergestellt, der zwischen der Düsengeometrie und dem Zustrom angeordnet ist. Innerhalb der Fluidkammer kann ein Fluid angeordnet sein, das durch die Düsengeometrien ausgestoßen werden soll. Nun sind Abmessungen der Düsengeometrien im µm-Bereich vorgesehen, so dass die wenigstens zwei Düsengeometrien ebenfalls relativ eng übereinander liegen. Dies führt dazu, dass der eine Zustrom, der eine jeweilige Düsengeometrie mit der Fluidkammer verbindet, ebenfalls recht eng an dem anderen Zustrom angeordnet ist, der die andere Düsengeometrie mit der Fluidkammer verbindet. Folglich werden die Zuströme nur durch einen dünnen Steg voneinander getrennt. Durch die Laserbearbeitung kann der dünne Steg entsprechend dünn ausgestaltet werden, sodass dadurch physikalische Grenzen der additiven Fertigung oder des Kunststoffspritzens überwunden werden. Dementsprechend wird die Herstellung eines Doppelstrahldüsenkörpers vereinfacht und damit kostengünstig gehalten.

Da Auslässe der wenigstens zwei Düsengeometrien eng beieinander liegen und die Düsengeometrien fluidisch mit der Fluidkammer verbunden sein müssen, ermöglicht ein Trichter eine günstige fluidtechnische Verbindung zwischen der Fluidkammer und der entsprechenden Düsengeometrie. Da der Trichter ausgehend von der Fluidkammer einen Fluidfluss hin zur Düsengeometrie realisieren muss, muss dieser ebenfalls in entsprechenden Größen hergestellt werden. So weist der Trichter je nach Ausführung der Düsengeometrien an einem ersten Bereich einen Durchmesser der entsprechenden Düsengeometrie auf, während ein zweiter Bereich des Trichters größer ist als der erste Bereich. Entsprechend lässt sich durch die Laserbearbeitung ein entsprechender Trichter einfach realisieren. Weiterhin kann durch die Laserbearbeitung, insbesondere im Rahmen der 3D-Laserablation, eine Form des Trichters frei gewählt werden. Dies erlaubt einfache Anpassungen und gute Optimierungsmöglichkeiten des Trichters zur Optimierung des Doppelstrahldüsenkörpers.

Beispielsweise kann der Düsenkörperrohling Zuströme aufweisen, die bereits durch das Spritzgussverfahren oder die additive Fertigung hergestellt wurden, während die Trichter anschließend durch Laserbearbeitung hergestellt werden.

Vorzugsweise weist die Laserbearbeitung Verfahren der Laserablation und/oder der 3D-Laserablation auf. Unter der Laserablation wird das Abtragen von Material von einer Oberfläche durch den Beschuss mittels eines gepulsten Lasers bezeichnet. Dabei führt der Laser bzw. die Laserstrahlung zu einer rapiden Erhitzung und folglich der Ausbildung eines Plasmas an der Oberfläche des Werkstücks. Die 3D-Laserablation ist eine Sonderform der Laserablation, bei dem Material in Dreidimension bearbeitet wird. Weiterhin ist beispielsweise eine Kombination der genannten Verfahren möglich. Dies führt zu einer großen Gestaltungsfreiheit und einer großen Flexibilität, wobei jedes der Verfahren für seinen Zwecke eingesetzt werden kann, was Zeit und Kosten spart.

Bei der Laserablation durchdringt eine Laserstrahl ausgehend von einer Laserquelle eine erste Oberfläche eines Werkstücks, hier des Düsenkörperrohlings, ohne an der ersten Oberfläche Material abzutragen, aufzuschmelzen oder zu verdampfen. Der Laserstrahl durchquert Material des Werkstücks bis er einer zur ersten Oberfläche gegenüberliegenden Oberfläche Material aufschmilzt bzw. verdampft und dadurch abträgt. Nun kann der Laserstrahl neu ausgerichtet werden, um an einer weiteren Position Material abzutragen. Eine Abtragungsrichtung ist dabei entgegen einer Ausbreitungsrichtung des Laserstrahls ausgerichtet.

Bei der 3D-Laserablation wird die Laserablation im drei Dimensionen durchgeführt. Dadurch kann Material in sämtlichen Formen abgetragen werden.

Weiterhin ermöglicht die 3D-Laserablation die Bearbeitung des Düsenkörperrohlings in einer Aufspannung. Dadurch wird ein Umspannen des Düsenkörperrohlings vermieden, so dass hier Zeit und Kosten eingespart werden können.

Auch können verschiedene Ausgestaltungen des Doppelstrahldüsenkörpers ausgehend von einem Düsenkörperrohling durch die Laserbearbeitung hergestellt werden. Entsprechend können die Düsenkörperrohlinge in großer Stückzahl hergestellt werden, was kostengünstig ist.

Vorzugsweise wird durch die Laserbearbeitung die Düsengeometrie mit einem Durchmesser kleiner 300 µm hergestellt. Vorzugsweise weisen die Düsengeometrien jeweils einen Durchmesser von kleiner 100 µm auf. Dabei ist der Begriff "kleiner als" "kleiner gleich" zu verstehen.

Erfindungsgemäß verwendet das Spritzgussverfahren bzw. die additive Fertigung ein Material mit mindestens einer Hauptkomponente aus der Gruppe PMMA, POM, PP, PE, ABS, COC, PA, PC, PBT, PEEK, PEI, PET und PPE. Das sind Materialien, die eine einfache Einstellung eines Spritzgussverfahrens bzw. einer additiven Fertigung erlauben.

Erfindungsgemäß ist die Laserbearbeitung mit einem Laserbohrverfahren kombiniert.

Laserbohren ist ebenfalls ein lichtsparendes Bearbeitungsverfahren, bei dem mittels Laserstrahlung nur so viel Energie in das Werkstück eingebracht wird, dass der Werkstoff aufgeschmolzen und teilweise verdampft wird. Durch eine Kombination verschiedener Laserbearbeitungsverfahren, wie dem Laserbohrverfahren, der Laserablation und der 3D-Laserablation können aus einem Düsenkörperrohling viele verschiedene Düsenkörper hergestellt werden. Dadurch wird ein kostengünstiges Verfahren vorgeschlagen, das eine gute Flexibilität aufweist.

Ein Doppelstrahldüsenkörper wird vorgeschlagen, bei dem zwischen einer Düsengeometrie und einer Fluidkammer ein Zustrom angeordnet ist, und/oder ein Trichter zwischen dem Zustrom und der Düsengeometrie angeordnet ist, wobei der Zustrom und/oder der Trichter durch Laserbearbeitung herstellbar sind. Der Zustrom verbindet die Düsengeometrie fluidisch mit der Fluidkammer. In der Fluidkammer kann Fluid angeordnet sein, das durch die Düsengeometrie nach außen gelangen soll. Da jede der Düsengeometrien mit einem eigenen Zustrom verbunden ist und die Düsengeometrien aufgrund ihrer Dimensionen relativ eng beieinander angeordnet sind, werden die Zuströme ebenfalls relativ eng aneinander angeordnet. Entsprechend trennt die Zuströme nur ein dünner Steg. Dieser dünne Steg lässt sich durch eine Laserbearbeitung einfach herstellen, während er durch ein Spritzgussverfahren oder die additive Fertigung nur schwierig herstellbar ist. Entsprechend ist der Doppelstrahldüsenkörper kostengünstig herstellbar.

Dabei ist jede der wenigstens zwei Düsengeometrien mit einem eigenen Trichter verbunden, wobei ein schmales Ende des Trichters mit der Düsengeometrie verbunden ist, und ein breites Ende des Trichters mit der Fluidkammer fluidisch verbunden ist. Da das schmale Ende des Trichters mit der Düsengeometrie verbunden ist, sollte dieses schmale Ende ebenfalls die Dimensionen der Düsengeometrie aufweisen. Entsprechend filigran muss der Trichter ausgestaltet sein. Dies ist kostengünstig durch eine Laserbearbeitung, wie beispielsweise der 3D-Laserablation, möglich.

Der Doppelstrahldüsenkörper kann beispielsweise für jede Düsengeometrie auch einen Trichter und einen Zustrom aufweisen, wobei die Düsengeometrie mit dem Trichter verbunden ist, und der Trichter weiterhin mit dem Zustrom. Der Zustrom ist neben dem Trichter auch mit der Fluidkammer verbunden. Dabei kann der Zustrom beispielsweise schon im Rahmen einer Düsenkörperrohlingfertigung hergestellt worden sein.

Vorzugsweise weist die Laserbearbeitung Verfahren der Laserablation und/oder der 3D-Laserablation auf. Bei der Laserablation wird Material von einer Oberfläche durch Beschuss mit einem gepulsten Laserstrahl bzw. einer gepulsten Laserstrahlung abgetragen. Die 3D-Laserablation entspricht im Wesentlichen der Laserablation, wobei bei der 3D-Laserablation im dreidimensionalen Raum Material bearbeitet werden kann. Entsprechend kann bei der Verwendung der 3D-Laserablation ein Düsenkörperrohling in einer Aufspannung bearbeitet werden. Folglich kann hierbei auf weitere Umspannungsvorgänge verzichtet werden, so dass dadurch der Doppelstrahldüsenkörper kostengünstig hergestellt ist.

Vorzugsweise weist die Düsengeometrie in einem Durchmesser ≤ 300 µm auf. Bevorzugt werden dabei Düsengeometrien mit einem Durchmesser von ≤ 100 µm. Diese Durchmesser lassen sich einfach und daher kostengünstig durch Laserbearbeitung herstellen.

Erfindungsgemäß weist der Doppelstrahldüsenkörper ein Material mit mindestens einer Hauptkomponente aus der Gruppe PMMA, POM, PP, PE, ABS, COC, PA, PC, PBT, PEEK, PEI, PET und PPE auf. Das sind Materialien, die sowohl durch ein Spritzgussverfahren oder additive Fertigung verarbeitet werden können, wobei diese Materialien gleichzeitig durch Laserbearbeitung bearbeitet werden können.

Erfindungsgemäß ist die Laserbearbeitung mit einem Laserbohrverfahren kombiniert.

Bei dem Laserbohren wird mittels Laserstrahlung lokal so viel Energie in das Werkstück eingebracht, dass der Werkstoff lokal aufgeschmolzen und teilweise verdampft wird. Dabei ist ein Aufschmelzen des Materials am Rande der Bohrung nicht erwünscht. Dadurch wird eine große Gestaltungsfreiheit erreicht, wobei aus einem Düsenkörperrohling verschiedene Doppelstrahldüsenkörper hergestellt werden können.

Beispielsweise ist das Material für die Laserbearbeitung transparent, sodass verschiedene Laserbearbeitungen möglich sind. Dadurch wird eine gute Flexibilität der Einsätze verschiedener Laserbearbeitungen ermöglicht.

Beispielsweise kann auch nur ein Bereich des Düsenkörperrohlings verschiedene Materialen aufweisen. So kann beispielsweise der Düsenkörperrohling dort transparentes Material aufweisen, wo eine Laserbearbeitung das erfordert.

Die Erfindung wird im Folgenden anhand eines bevorzugten Ausführungsbeispiels in Verbindung mit der Zeichnung beschrieben. Hierin zeigen:
- Fig. 1: eine schematische Draufsicht eines Düsenkörperrohlings,
- Fig. 2: eine schematische Schnittdarstellung eines Düsenkörperrohlings,
- Fig. 3: eine Draufsicht eines Düsenkörperrohlings mit zwei Zuströmen,
- Fig. 4: eine schematische Schnittdarstellung eines Düsenkörperrohlings mit zwei Zuströmen,
- Fig. 5: eine schematische Schnittdarstellung eines Doppelstrahldüsenkörpers,
- Fig. 6: eine Detailansicht der in Fig. 5 gezeigten Düsengeometrien,
- Fig. 7: eine schematische Draufsicht eines Dreifachstrahldüsenkörpers,
- Fig. 8: eine schematische Seitenansicht eines Dreifachstrahldüsenkörpers,
- Fig. 9: eine schematische Schnittdarstellung eines Dreifachstrahldüsenkörpers,
- Fig. 10: eine schematische Detaildarstellung des Dreifachstrahldüsenkörpers,
- Fig. 11: eine schematische Schnittdarstellung eines Dreifachstrahldüsenkörpers,
- Fig. 12: eine schematische Detaildarstellung der Schnittdarstellung eines Dreifachstrahldüsenkörpers.

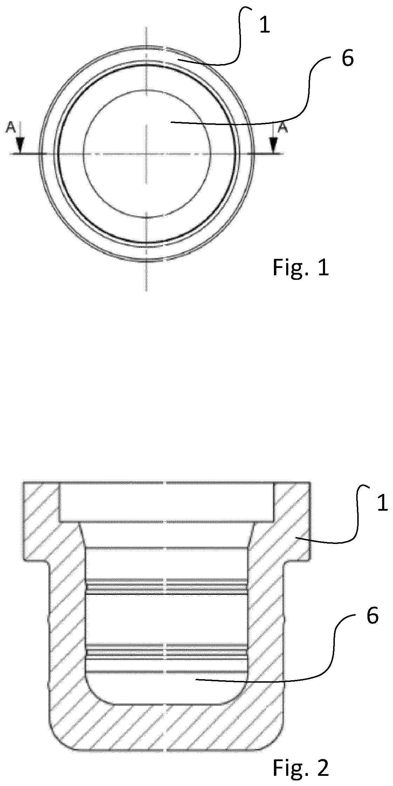

In Fig. 1 ist ein Düsenkörperrohling 1 dargestellt, wie er beispielsweise aus einem Spritzgussverfahren oder aus einer additiven Fertigung hergestellt wird. Der Düsenkörperrohling 1 weist als Hauptkomponente beispielsweise PMMA, POM, PP, PE, ABS, COC, PA, PC, PBT, PEEK, PEI, PET und PPE bzw. eine Kombination der genannten Materialien auf.

In Fig. 2 ist der Düsenkörperrohling 1 mit Sicht auf eine Fluidkammer 6 in einer Schnittdarstellung gemäß Fig. 1 dargestellt. Der Düsenkörperrohling 1 weist Elemente auf, die sich durch ein Spritzgussverfahren oder additive Fertigung herstellen lassen. Anschließend wird der Düsenkörperrohling 1 zum Laserbearbeiten überführt.

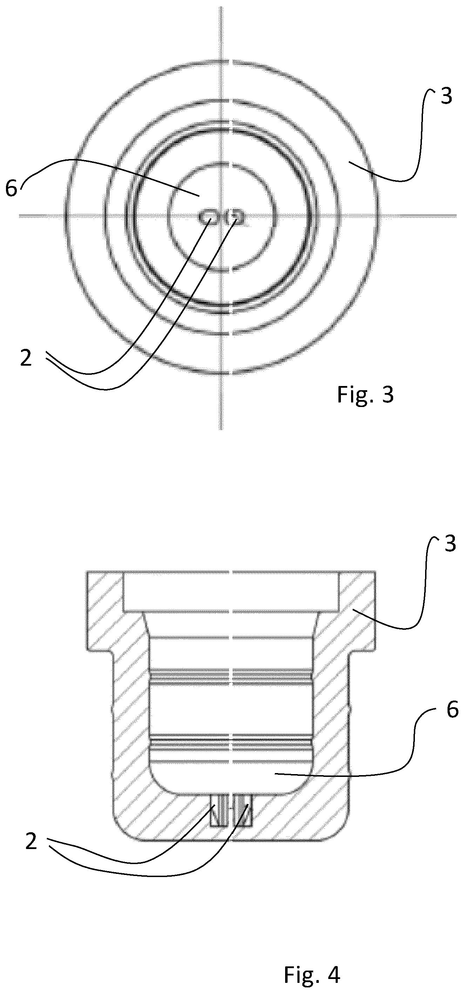

In Fig. 3 ist eine Draufsicht des Düsenkörperrohlings 1 gezeigt, wobei der in Fig. 3 gezeigte Düsenkörperrohling zwei Zuströme 2 und eine Fluidkammer 6 aufweist. Diese beiden Zuströme 2 sind im vorliegenden Ausführungsbeispiel spiegelsymmetrisch angeordnet. Als Spiegelachse dient dabei eine Durchmesserrichtung des Düsenkörperrohlings 1. Eine alternative Ausgestaltung des Düsenkörperrohlings 1 ist ebenfalls möglich, sodass die Zuströme ebenfalls anders positioniert werden können.

In Fig. 4 ist der Düsenkörperrohling 1 mit zwei Zuströmen 2 des in Fig. 3 bezeichneten Schnittes dargestellt.

Die in Fig. 3 und 4 dargestellten Zuströme können entweder durch das Spritzgussverfahren oder durch additive Fertigung erzeugt werden. Alternativ zu der additiven Fertigung oder dem Spritzgussverfahren können die Zuströme 2 auch durch eine Laserbearbeitung hergestellt werden.

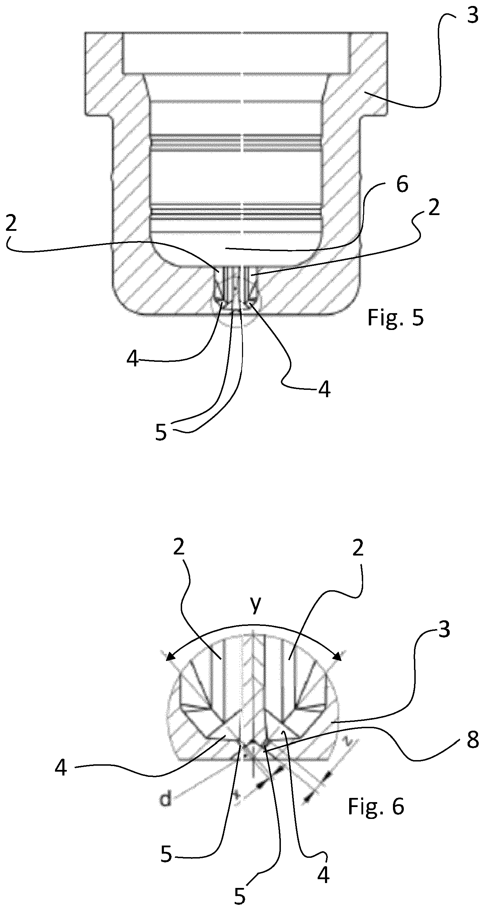

Fig. 5 zeigt einen Doppelstrahldüsenkörper 3, der neben Zuströmen 2 und einer Fluidkammer 6 auch Trichter 4 und zwei Düsengeometrien 5 aufweist.

In Fig. 6 ist eine Detailansicht der in Fig. 5 gezeigten Düsengeometrieanordnung gezeigt. Dabei weisen die Düsengeometrien 5 einen Durchmesser X und eine Länge Z auf. Weiterhin weisen die Düsengeometrien 5 jeweils eine Achse auf, wobei die beiden Achsen einen Winkel Y bilden. Die beiden Achsen schneiden sich außerhalb der Düsengeometrien in Austragsrichtung. Die Austragsrichtung ist dabei entlang eines Fluidaustrages definiert. Die beiden Düsengeometrien 5 münden in eine Ausstoßvertiefung 8.

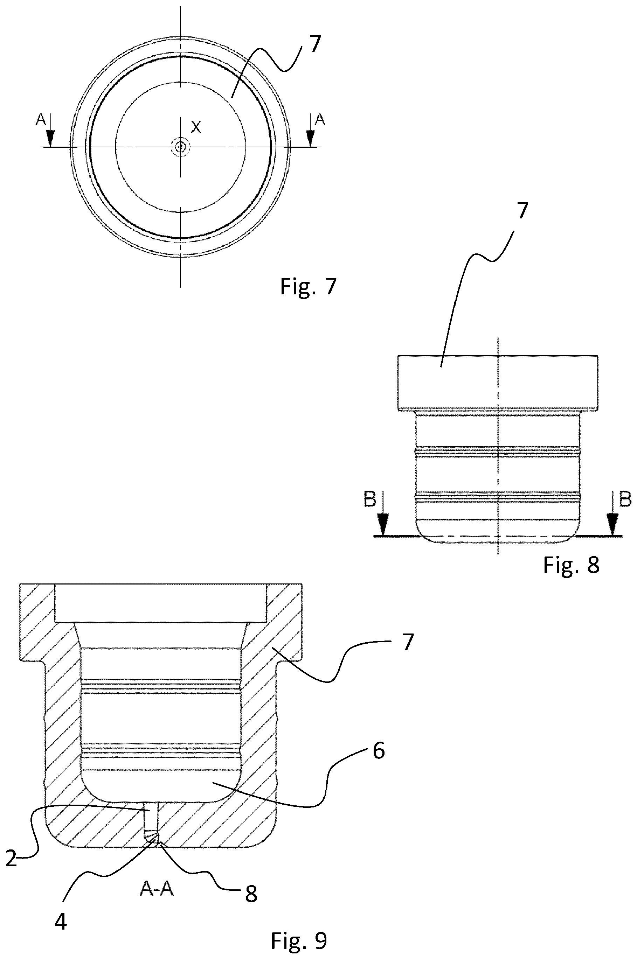

In Fig. 7 ist eine schematische Draufsicht auf einen Dreifachstrahldüsenkörper 7. Der Dreifachstrahldüsenkörper weist drei Düsengeometrien 5 auf.

Fig. 8 zeigt eine schematische Seitenansicht des Dreifachstrahldüsenkörpers 7.

Fig. 9 ist eine Schnittdarstellung des in Fig. 8 gezeigten Dreifachstrahldüsenköpers 7 entlang der Linie A-A. In der Schnittdarstellung ist ein Zustrom 2, ein Trichter 4 und eine Düsengeometrie 5 dargestellt. Die verbleibenden zwei Zuströme, Trichter und Düsengeometrien 5 sind in der Schnittdarstellung nicht gezeigt. Der Dreifachstrahldüsenkörper 7 weist auch ebenfalls eine Fluidkammer 6 auf. Ein Aufbau aus der Düsengeometrie 5 mit jeweils dem Trichter 4 und dem Zulauf 2 ist identisch zum oben beschriebenen Aufbau des Doppelstrahldüsenkörper 3, wobei beim Dreifachstrahldüsenkörper 7 drei Düsengeometrien 5, drei Trichter 4 und drei Zuläufe 2 angeordnet sind. Die Düsengeometrien 5 mündet in eine Ausstoßvertiefung 8.

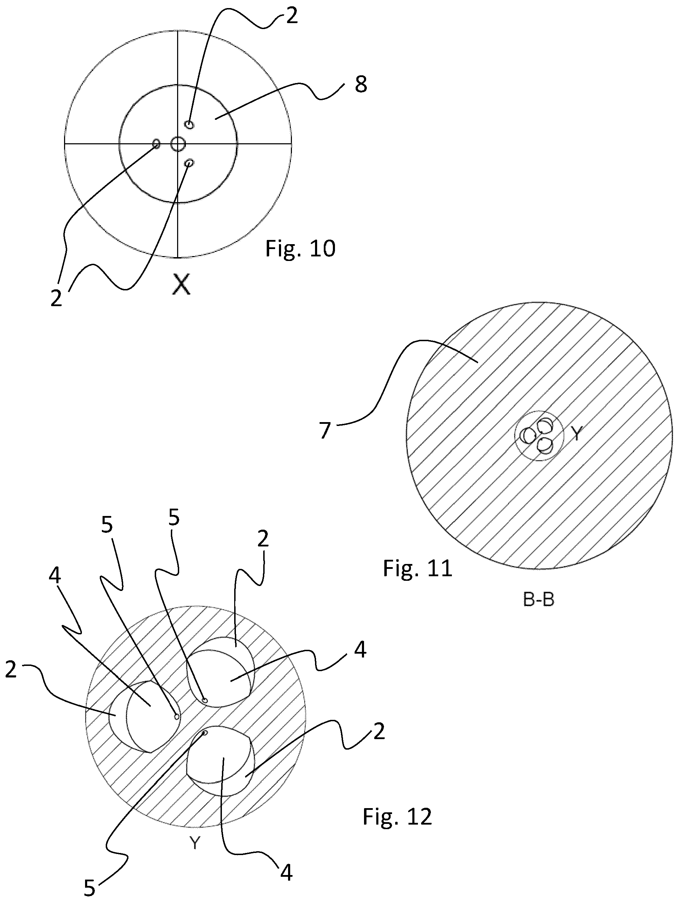

Fig. 10 zeigt ein Detail X der in Fig. 7 Düsengeometrien 5. Die Düsengeometrien 5 sind rotationssymmetrisch angeordnet. Der Dreifachstrahldüsenkörper 7 weist die Ausstoßvertiefung 8 auf, in die die Düsengeometrien 5 münden.

Fig. 11 zeigt eine Schnittdarstellung des Dreifachstrahldüsenkörpers 7, wobei Fig. 11 eine Schnittdarstellung der in Fig. 8 gezeigten Linie B-B ist.

Fig. 12 zeigt ein Detail Y der Fig. 11. Die Zuströme 2 gehen in Trichter 4 über, wobei an den jeweiligen schmalen Enden der Trichter 5 eine Düsengeometrie 5 angeordnet ist. Dabei sind die Düsengeometrien 5 so angeordnet, dass deren Achsen sich außerhalb des Dreifachstrahldüsenkörpers 7 schneiden. Dies entspricht im Wesentlichen der Anordnung eines Doppelstrahldüsenkörpers 3 mit dem Unterschied, dass sich beim Dreifachstrahldüsenkörper 7 drei Strahlen treffen und nicht zwei, wie beim Doppelstrahldüsenkörper 3.

Der Dreifachstrahldüsenkörper 7 kann aus einem Düsenkörperrohling 1 hergestellt werden, wobei die Düsengeometrien 5, die Trichter 4 und/oder die Zuläufe 2 durch eine Laserbearbeitung hergestellt werden können. Weiterhin kann die Ausstoßvertiefung 8 beispielsweise durch eine Laserbearbeitung hergestellt werden.

Der Düsenkörperrohling 1, der Doppelstrahldüsenkörper 3 und der Dreifachstrahldüsenkörper 7 weisen jeweils eine Fluidkammer 6 auf, in der ein Fluid angeordnet werden kann, so dass dieses Fluid durch die Düsengeometrien 5 ausgestoßen werden kann. Das Ausstoßen des Fluids erfolgt also in Richtung einer Ausstoßrichtung, die sich dementsprechend von der Fluidkammer 6 über den Zustrom 2 und den Trichter 4 hin zur Düsengeometrie 5 erstreckt.

Die Laserbearbeitung weist dabei Verfahren der Laserablation und des Laserbohrens auf.

Beim Laserbohren wird mittels eines Lasers Material des Werkstückes in einem kurzen Zeitraum so stark erhitzt, dass dieses aufschmilzt und teilweise verdampft. Dabei ist die Abtragsrichtung entlang der Laserausbreitungsrichtung orientiert. Bei dem Laserbohren arbeitet man sich also entlang der Laserrichtung. Bei der Laserablation durchdringt die Laserstrahlung eine erste Oberfläche, die dem Lasererzeugungsapparat zugewandt ist, durchquert das Material des Werkstückes und verdampft an einer Oberseite einer Rückseite des Werkstückes Material. Dies wiederholt man so lange, bis man entsprechende Strukturen erarbeitet hat. Dabei ist die Abtragungsrichtung im Wesentlichen entgegen der Laserausbreitungsrichtung. Das gleiche Prinzip findet auch bei der 3D-Laserablation Anwendung, wobei bei der 3D-Laserablation dreidimensionale Strukturen erzeugt werden können. Somit sind durch die 3D-Laserablation auch Hinterschnitte oder andere komplexe Formen erzeugbar, solange verdampfter Kunststoff bzw. verdampftes Material nach außen entweichen kann.

Durch die Kombination der verschiedenen Laserbearbeitungen kann der Düsenkörperrohling in einer Aufspannung so weit bearbeitet werden, dass er keinerlei Nacharbeit mehr benötigt.

Außerdem können ausgehend von einem Düsenkörperrohling 1 verschiedene Geometrien der Zuströme 2, des Trichters 4 oder der Düsengeometrien 5 einfach umgesetzt werden. Dadurch kann eine hohe Stückzahl der Düsenkörperrohlinge 1 durch ein Spritzgussverfahren hergestellt werden, die anschließend je nach Ausgestaltung durch die Laserbearbeitung bearbeitet werden.

Neben den hier gezeigten Doppelstrahldüsenkörpern 3 und Dreifachstrahldüsenkörpern 7 können auch weitere nicht dargestellte Mehrfachstrahldüsenkörper durch eine Laserbearbeitung hergestellt werden. So wird beispielsweise ein Düsenkörperrohling 1 durch Laserbearbeitung zu einem Mehrfachstrahldüsenkörper bearbeitet, wobei der fertig bearbeitete Mehrfachstrahldüsenkörper mehr als drei Düsengeometrien 5, Zuläufe 2 und Trichter 4 aufweist. Dabei schneiden sich die Achsen der Düsengeometrien 5 in einem Punkt außerhalb des Mehrfachstrahldüsenkörpers.

### Bezugszeichenliste

- 1: Düsenkörperrohling
- 2: Zuströme
- 3: Doppelstrahldüsenkörper
- 4: Trichter
- 5: Düsengeometrie
- 6: Fluidkammer
- 7: Dreifachstrahldüsenkörper
- 8: Ausstoßvertiefung
- X: Durchmesser der Düsengeometrie
- Y: Winkel der Achsen des Düsengeometrien zueinander
- Z: Länge der Düsengeometrie

## Patentansprüche

1. Verfahren zur Herstellung eines Doppelstrahldüsenkörpers (3) aus einem Düsenkörperrohling (1), der mittels Spritzguss oder additiver Fertigung unter Verwendung eines Materials mit mindestens einer Hauptkomponente aus der Gruppe PMMA, POM, PP, PE, ABS, COC, PA, PC, PBT, PEEK, PEI, PET und PPE hergestellt wird, wobei der Doppelstrahldüsenkörper (3) wenigstens zwei Düsengeometrien (5) aufweist, wobei die wenigstens zwei Düsengeometrien (5) jeweils eine Achse aufweisen, wobei die wenigstens zwei Achsen sich in einer Austragsrichtung erstrecken und außerhalb der Düsengeometrien (5) an einem Schnittpunkt schneiden, wobei der Düsenkörperrohling (1) anschließend durch Laserbearbeitung zum Doppelstrahldüsenkörper (3) bearbeitet wird, wobei
entweder durch die Laserbearbeitung jeweils ein Zustrom (2) hergestellt wird, der zwischen einer jeweiligen Düsengeometrie (5) und einer Fluidkammer (6) angeordnet ist, wobei durch die Laserbearbeitung jeweils ein Trichter (4) hergestellt werden kann, der zwischen der jeweiligen Düsengeometrie (5) und dem jeweiligen Zustrom (2) angeordnet ist,
oder durch die Laserbearbeitung jeweils ein Trichter (4) hergestellt wird, der zwischen einer jeweiligen Düsengeometrie (5) und einem jeweiligen Zustrom (2) angeordnet ist,
**dadurch gekennzeichnet,**
**dass** die Laserbearbeitung ein Verfahren der Laserablation und ein Laserbohrverfahren aufweist, wobei beim Laserbohrverfahren die Abtragsrichtung entlang der Laserausbreitungsrichtung ausgerichtet ist, und wobei bei der Laserablation die Abtragungsrichtung im Wesentlichen entgegen der Laserausbreitungsrichtung ausgerichtet ist, so dass die Laserstrahlung eine erste Oberfläche durchdringt, die dem Lasererzeugungsapparat zugewandt ist, den Düsenkörperrohling durchquert und an einer Oberseite einer Rückseite des Düsenkörperrohlings Material verdampft.

2. Verfahren nach Anspruch 1, **dadurch gekennzeichnet, dass** die Laserbearbeitung Verfahren der 3D-Laserablation aufweist.

3. Verfahren nach Anspruch 1 oder 2, **dadurch gekennzeichnet, dass** durch die Laserbearbeitung die Düsengeometrie (5) mit einem Durchmesser (X) kleiner 300µm hergestellt wird.

## Claims

1. A method for manufacturing a dual-jet nozzle body (3) from a nozzle body blank (1), which is produced by injection moulding or additive manufacturing using a material comprising at least one main component from the group consisting of PMMA, POM, PP, PE, ABS, COC, PA, PC, PBT, PEEK, PEI, PET and PPE, wherein the dual-jet nozzle body (3) has at least two nozzle geometries (5), wherein the at least two nozzle geometries (5) each comprise an axis, wherein the at least two axes extend in a discharge direction and intersect at a point outside the nozzle geometries (5), wherein the nozzle body blank (1) is subsequently machined by laser processing to form the dual-jet nozzle body (3), wherein
either the laser machining creates an inlet (2) in each case, which is arranged between a respective nozzle geometry (5) and a fluid chamber (6), whereby the laser machining can create a funnel (4) in each case, which is arranged between the respective nozzle geometry (5) and the respective inlet (2),
or by means of laser processing, a funnel (4) is produced in each case, which is arranged between a respective nozzle geometry (5) and a respective inlet (2),
**characterized in that**
the laser processing comprises a laser ablation process and a laser drilling process, wherein in the laser drilling process the ablation direction is aligned along the direction of laser propagation, and wherein, in the laser ablation, the direction of ablation is essentially opposite to the direction of laser propagation, such that the laser radiation penetrates a first surface facing the laser generation apparatus, passes through the nozzle body blank and vaporizes material at a upper surface of a rear side of the nozzle body blank.

2. The method according to claim 1, **characterized in that** the laser processing comprises a 3D laser ablation process.

3. The method according to claim 1 or 2, **characterized in that** the nozzle geometry (5) is produced by means of laser machining with a diameter (X) of less than 300 µm.

## Revendications

1. Procédé, destiné à créer un corps de buse (3) à double jet à partir d'une ébauche (1) de corps de buse, que l'on créé par moulage par injection ou par fabrication additive, en utilisant une matière dotée d'au moins un composant du groupe PMMA, POM, PP, PE, ABS, COC, PA, PC, PBT, PEEK, PEI, PET et PPE, le corps de buse (3) à double jet comportant au moins deux géométries (5) de buse, les au moins deux géométries (5) de buse comportant chacune un axe, les au moins deux axes s'étendant dans une direction d'enlèvement et se recoupant à l'extérieur des géométries (5) de buse sur un point d'intersection, l'ébauche (1) de corps de buse étant usinée par la suite par usinage au laser pour obtenir le corps de buse (3) à double jet, soit par l'usinage au laser, chaque fois un afflux (2) étant établi, qui est placé entre une géométrie (5) de buse respective et une chambre à fluide (6), par l'usinage au laser, chaque fois une trémie (4) pouvant être créée, qui est placée entre la géométrie (5) de buse respective et l'afflux (2) respectif,
ou par l'usinage au laser, chaque fois une trémie (4) étant créée, qui est placée entre une géométrie (5) de buse respective et un afflux (2) respectif,
**caractérisé en ce que** l'usinage au laser comporte un procédé d'ablation au laser et un procédé de perçage au laser, lors du procédé de perçage au laser, la direction d'enlèvement étant orientée le long de la direction de propagation du laser et lors de l'ablation au laser, la direction d'enlèvement étant sensiblement orientée à l'encontre de la direction de propagation du laser, de sorte que le faisceau laser pénètre à travers une première surface qui fait face à l'instrument générateur de laser, passe par l'ébauche de corps de buse et évapore de la matière sur une face supérieure d'une face arrière de l'ébauche de corps de buse.

2. Procédé selon la revendication 1, **caractérisé en ce que** l'usinage au laser comporte des procédés d'ablation au laser en 3D.

3. Procédé selon la revendication 1 ou 2, **caractérisé en ce que** par l'usinage au laser, l'on créé la géométrie (5) de buse avec un diamètre (X) inférieur à 300 µm.
